# EUROPEAN PATENT APPLICATION

(11) **EP 1 731 986 A2**
(43) Date of publication of application: **13.12.2006**
(21) Application number: 06076751.4
(22) Date of filing: 24.01.2003
(51) Int. Cl.: G06F 1/16, G02F 1/13, G02F 1/133, H04N 5/64, G02F 1/1333

(54) **Portable multi-display device**

(30) Priority: 29.01.2002 KR 20020005256; 02.03.2002 KR 20020011225; 14.05.2002 KR 20020026604
(62) Divisional of application: 03703413.9
(71) Applicant: Kim, Si Han, Kwangju-Kun, Kyunggi-Do 464-862 (KR)
(72) Inventor: Kim, Si Han, Kwangju-Kun, Kyunggi-Do 464-862 (KR)
(74) Representative: Pfenning, Meinig & Partner GbR

(57) **Abstract**

A portable multi-display device includes at least two panel housings in which a variety (2) of circuits (2b) and displays (2a) are mounted, the displays being designed adjacent to each other at their one side, and framework (161) for fixing the displays to mount the displays into the panel housings, the framework being provided at its one side with a screen joint portion (163d).

## Description

### [Technical Field]

The present invention relates to a portable multi-display device for securely mounting displays on a panel housing while allowing the displays to be adjacent one another at their at least one side.

### [Background of Art]

A scheme for realizing a large screen using more than two displays has been applied to a large display device.

In addition, in recent years, as portable display devices has been improved in their performance and further applied with functions such as a mobile Internet, the requirement of a large sized screen is further increased. Generally, a flat display is used for the portable display device, and there are, as the flat display, an LCD (Liquid Crystal Display), an FED (Field Emission Display), a PDP (Plasma Display Panel), and an EL (Electro Luminescent).

Meanwhile, in a portable display device having a large-sized screen, the large-sized screen cannot meet the basic requirements such as the size and mobility for the portable display device. Therefore, a portable display device employing flat displays that can be detachably connected to each other has been proposed.

In a portable multi-display device employing such multi-displays, a panel housing is provided with an opening to dispose the displays to be adjacent to each other by allowing at least one side of one of the display to contact to an adjacent side of another display.

However, in such a device, since there is a disadvantage that an input device or a backlight system may be removed out of the opening by outer impact, a reliability of the portable display device is deteriorated.

### [Summary of the Invention]

Therefore, the present invention has been made in an effort to solve the above-described problems of the prior art. It is an objective of the present invention to provide a portable multi-display device that can securely mount displays on a panel housing while allowing the displays to be adjacent one another at their at least one side.

To achieve the above objective, the present invention provides a portable multi-display device comprising at least two panel housings in which a variety of circuits and displays are mounted, the displays being designed adjacent to each other at their one side; and framework for fixing the displays to mount the displays into the panel housings, the framework being provided at its one side with a screen joint portion.

The screen joint portion may be opened, or not formed on an upper portion of the framework. Alternatively, the screen joint portion may be formed thinner than other portions of the framework.

The display mounted on framework may comprise hooking means and the display panel or the driving circuit also comprises hooking means.

The framework comprises a hook portion for fixing the hooking means of the display, and the panel housing comprises fixing means for fixing the hook portion of the framework.

The portable multi-display device of the present invention may further comprise a chassis for mounting the framework, the chassis being provided with a screen joint portion.

Meanwhile, the framework mounted on the first panel housing and the framework mounted on the second panel housing are disposed in a symmetrical structure.

In addition, fixing means for fixing the framework is formed on a lower portion of the framework.

In the present invention, a joint portion on the basis of which the displays are disposed adjacent to each other is mounted on the screen joint portion of the framework.

In addition, in the present invention, the display assembly can be mounted on the panel housing in a state the display assembly is mounted only one of the framework and the chassis. In this case, the framework becomes the chassis.

The chassis is provided with a chassis hook portion that is mounted on the fixing means of the panel housing.

The present invention further provides a portable multi-display device comprising at least two panel housings disposed adjacent to each other at their one side; and at least two displays mounted on the panel housings to be adjacent to each other at their at least one side, the displays being provided with hooking means.

The hooking means is defined by a cutting portion formed on the display panels or a hooking member attached on the display panel.

The display panel may be provided with a cutting portion that is formed by cutting upper or lower substrates before the display panel is separated from an original wafer.

### [Brief Description of Drawings]

FIGS. 1a and 1b show views illustrating an external appearance of a multi-display device of the present invention;
FIG. 2 is a view illustrating a mounting of a display assembly on a framework;
FIG. 3 is a view illustrating a mounting of a framework depicted in FIG. 2 on a chassis;
FIG. 4 is a view illustrating another embodiment of a mounting of a display assembly on a framework;
FIG. 5 is a view illustrating a framework depicted in FIG. 4 on a chassis;
FIG. 6 is a view illustrating a mounting of a framework and a chassis on a panel housing;
FIGS. 7a and 7b are views illustrating another embodiment of a mounting of a display panel on a framework;
FIG. 8 is a view illustrating a symmetrical structure of a framework;
FIG. 9 is a view illustrating another embodiment of a mounting of a display on a panel housing;
FIG. 10 is a view illustrating a display panel;
FIG. 11 is a view illustrating a method for forming a cutting portion on a display panel;
FIG. 12 is a view illustrating another embodiment of a mounting of a display on a framework;
FIGS. 13a to 13c are views illustrating another embodiment of a method for forming a cutting portion;
FIG. 14 is a view illustrating an embodiment of a hooking operation of a panel housing on a connection-cutting portion;
FIG. 15 is a view illustrating a panel housing provided with a lower base portion;
FIGS. 16a and 16b are views illustrating display fixing means;
FIG. 17 is a view illustrating another embodiment of a mounting of a display on a framework;
FIG. 18 is a view illustrating an embodiment of fixing means that is separated from a lower supporting portion; and
FIG. 19 is a view illustrating an embodiment of a panel housing provided with a screen joint portion.

### [Preferred Embodiments of the Invention]

Preferred embodiments of the present invention will be described hereinafter in conjoint with the accompanying drawings.

The present invention provides a portable multi-display device providing an effect of watching a single screen formed by connecting at least two flat displays disposed to be adjacent to each other. Here, an LCD, an FED, a PDP, and an electric paper can be used as the flat display.

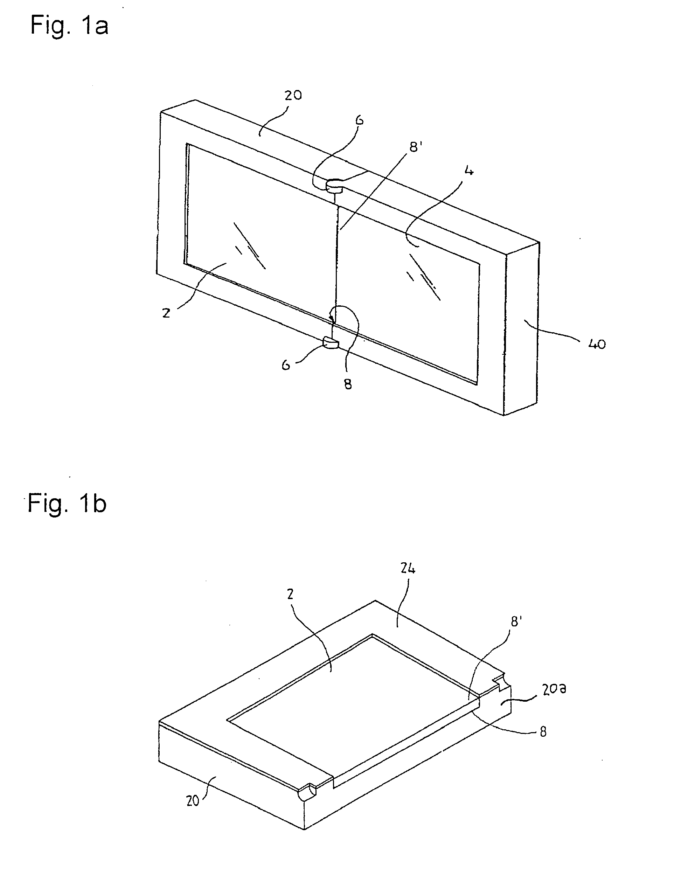

FIGS. 1a and 1b are views illustrating an external appearance of a multi-display device of the present invention, in which plural displays are adjacent to each other at their one side.

As shown in FIG. 1a, the portable multi-display device comprises two panel housings 20 and 40 on which displays 2 and 4 are respectively mounted. When the display device is unfolded, the displays 2 and 4 becomes adjacent to each other at their one side. That is, a single screen is realized as sides of the displays contact each other or close to each other. At this point, a joint portion 8' of the displays are located adjacent to each other.

The two panel housings 20 and 40 are connected to each other by connecting means 6 that is designed to be foldable and unfoldable. In this embodiment, a hinge is used as the connecting means 6. In addition, the two panel housings 20 and 40 are connected by a circuit, which is omitted in the drawing.

FIG. 1b illustrates a single panel housing on which a display is mounted.

The panel housings 20 and 40 defines an opening 8 which allows the displays are disposed adjacent to each other at their one side. It is not always to penetrate the opening 8, but instead, the opening 8 may be formed to be thinner than the sides 20a of the panel housings 20 and 40 so that the displays can be adjacent at their at least one side through the opening 8.

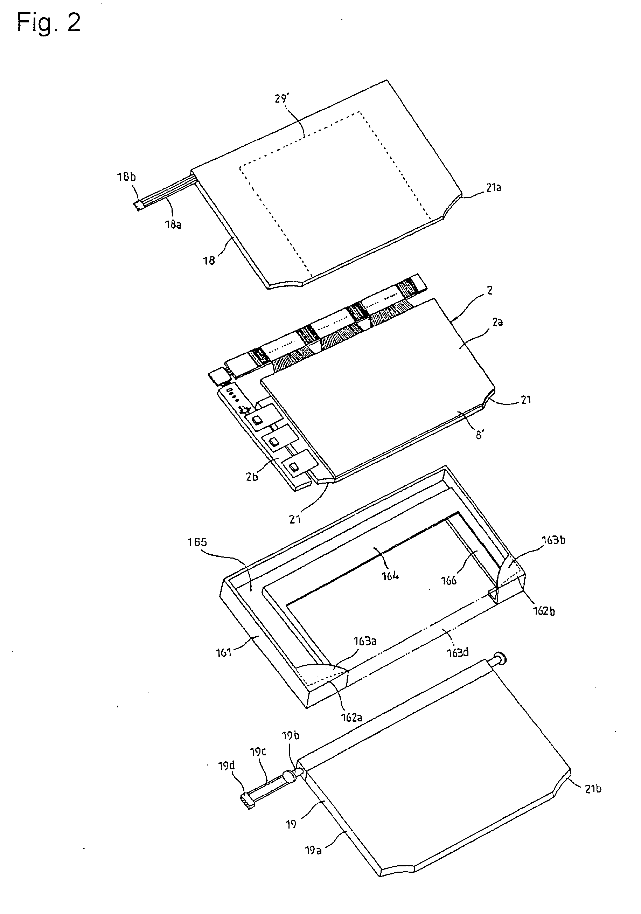

FIG. 2 is a view illustrating a mounting of a display assembly on a framework.

As shown in the drawing, a display assembly composed of a display 2 having a display panel 2a and a display circuit 2b, an input system 18 and a backlight system 19 is mounted on a framework 161.

The input system 18 is provided with a signal connecting line 18a and a connector 18b, and the backlight system 19 is provided with a light plate 19a, a lamp 19b, a power supply line 19c and a connector 19d.

Here, the backlight system 19, the display panel 2a, and the display circuit 2b are respectively mounted on a backlight-mounting portion 166, a panel-mounting portion 164, and a circuit-mounting portion 165 that are formed on the framework 161. In addition, the input system 18 is mounted on a top of the display panel 2a.

Meanwhile, it is not necessary to mount the backlight-mounting portion 166 on the framework 161. That is, in the case where the framework 161 is mounted to a chassis that will be described herein below, the bottom of a lower chassis 16a functions as a mounting portion of the backlight.

The framework 161 is provided with a screen joint portion 163d so that the displays 2 and 4 are disposed to be adjacent to each other at least their one side through the framework 161 mounted on the first panel housing 20 and the framework mounted on the second panel housing 40.

The screen joint portion 163d is designed in an opened type having a "⊏"-shape or to be thinner than other portions of the framework 161. In addition, the screen joint portion 163d of the framework 161 may not be formed on an upper portion of the framework 161 but only on a side or a lower portion of the framework 161. It is preferable that the thickness of the framework 161 is about 1 mm, but the thickness of the screen joint portion 163d is about 0.3 mm.

Accordingly, when the joint portion 8' of the display 2 is mounted on the screen joint portion 163d of the framework 161, the displays are disposed to be adjacent to each other at their one side.

In the present invention, hooking means is provided on the display assembly and the framework 161 so that the display can be more securely fixed by a mutual hooking operation.

For realizing this, portions of the display panel 2a and the display circuit 2b are cut away to define a cutting portion 21, and the input system 18 and the light plate 19a of the backlight system 19 are respectively provided with cutting portions 21 a and 21 b. Here, the display area 29' of the screen should not be provided with a cutting portion.

The framework 161 is also provided with hook portions 162a and 162b as hooking means. In addition, to securely fix the hook portions 162a and 162b on the framework 161, hook fixing portions 163a and 163b are further provided. The hook fixing portions 163a and 163b are for preventing the hook portions 162a and 162b from outwardly widening.

Therefore, when the display assembly is mounted on the framework 161, the cutting portions 21, 21 a, 21 b of the display assembly are hooked on the hook portions 162a and 162b of the framework 161, thereby being securely fixed.

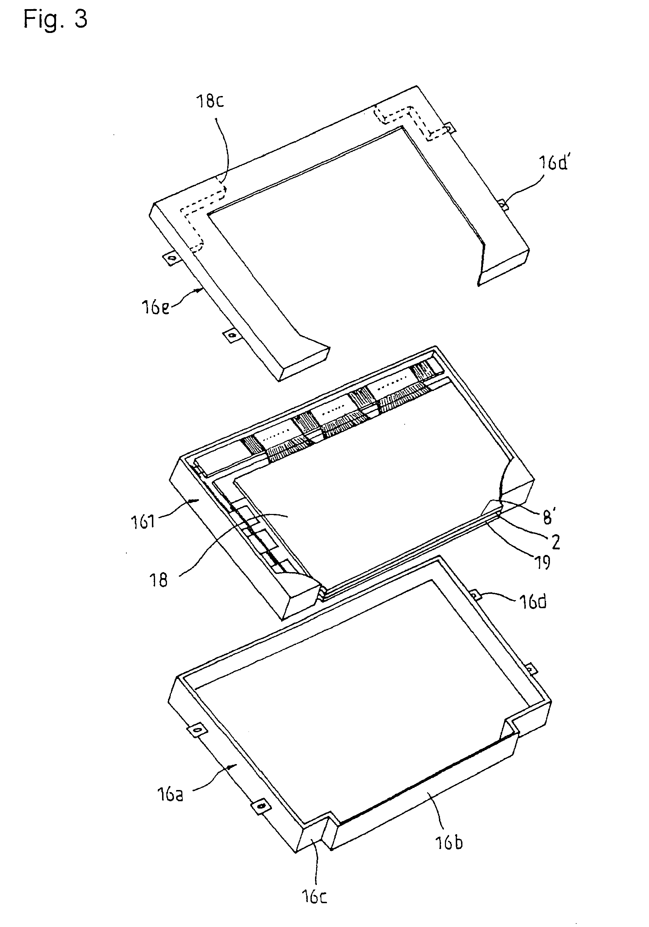

FIG. 3 shows a view illustrating a mounting of the framework depicted in FIG. 2 on a chassis.

The framework 161 on which the display assembly is mounted is mounted on a lower chassis 16a and covered by an upper chassis 16e. The upper chassis 16e and the lower chassis 16a are securely coupled by chassis fixing portions 16d and 16d'. Here, the display joint portion 8' is mounted on a screen joint portion 16b of the chassis so as to be disposed to be adjacent to a joint portion of another display. In the drawing, the reference numeral 16c that is not described indicates a chassis hook portion.

Meanwhile, since there is a need to fix the input system 18 when mounting the input system 18 on the framework 161, an input system fixing portion 18c is formed on the inner surface of the upper chassis 16e. The input system fixing portion 18c may be formed on a top of the framework 161 instead of the upper chassis 16e.

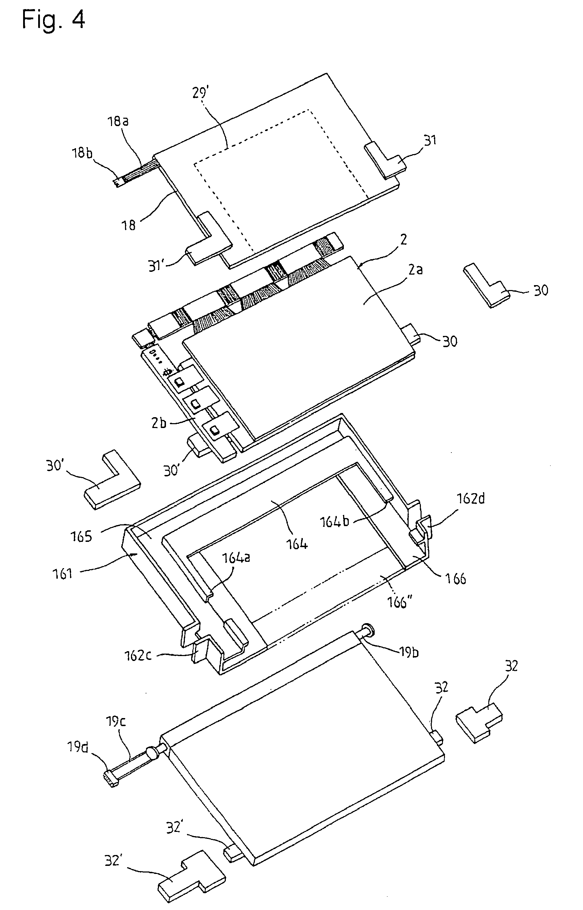

FIG. 4 is a view illustrating another embodiment of a mounting of the display assembly on the framework, in which hooking means depicted in FIG. 2 is modified.

As shown in the drawing, as hooking means for the display or the display assembly, hooking members 31 and 31' are provided on the top of the input system 18, and another hooking members 32 and 32' are provided on the lower end of the backlight system 19. Another hooking members 30 and 30' are also provided on the display panel 2a and the display circuit 2b.

The hooking members 30, 30', 31 and 31' should not be attached on an inner portion of the screen display area 29', but the hooking members 32 and 32' attached on the backlight system 19 may be attached on an inner portion of the screen display area 29'.

The hooking members 30, 30', 31, 31', 32 and 32' of the display assembly are hooked on hook portions 162c and 162d that are differently designed from those depicted in FIG. 2.

When the display panel 2a is mounted on the panel-mounting portion164, since the hooking member 30 is located on a hook-cutting portion 164b of the framework 161, it can be fixed on the hook portions 162c and 162d of the framework 161 without any interruption.

Meanwhile, an extending portion 166" extended from the backlight-mounting portion 166 can be formed or a lower end of the backlight-mounting portion 166 can be formed in a plate-shape to obstruct. A portion of the backlight-mounting portion 166 may be cut away so as to mount the hooking members 32 and 32' attached on the lower end of the backlight system 19.

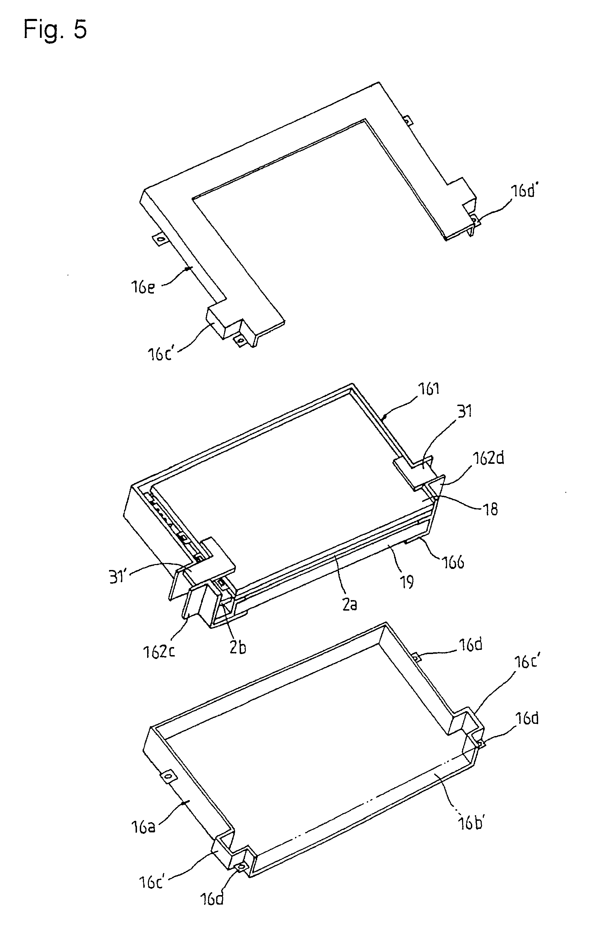

FIG. 5 shows a view illustrating a mounting of the framework depicted in FIG. 4 on the chassis.

When the display assembly fixed on the framework 161 is mounted on the lower chassis 16a and covered by the upper chassis 16e, the display assembly is mounted on the chassis. At this point, the hook portions 162c and 162d of the framework 161 are fixed on a chassis hook portion 16c'.

In this embodiment, since the displays are disposed to be adjacent to each other on the basis of the screen joint portion 16b', the screen joint portion 16b' may be formed to be thinner than the portion of the chassis. In addition, the screen joint portion 16b' of the chassis may be omitted to define an opening. Alternatively, the screen joint portion 16b' of the chassis may not be formed on an upper portion but only sides and lower portions of the chassis so as not to interrupt displaying on the upper portion of the joint portion 8'.

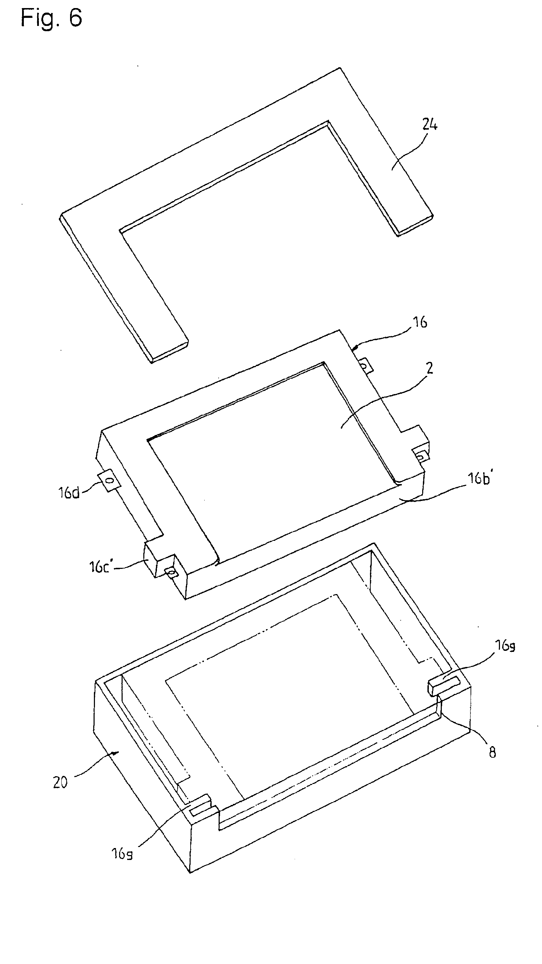

FIG. 6 shows a view illustrating a mounting of the framework and the chassis on the panel housing.

The chassis 16 on which the display assembly is mounted is mounted on the panel housing 20. In the drawing, the display assembly and the chassis 16 mounted on the panel housing are illustrated in a broken-line. After mounting the chassis 16, the panel housing cover 24 is folded.

The screen joint portion 16b' of the chassis 16 is mounted on the opening 8 of the panel housing 20, and the chassis hook portion 16c' of the chassis is fixedly mounted on fixing means 16g of the panel housing 20. That is, the hooking means of the display assemblies 2, 18, 19 is finally fixed on the fixing means 16g of the panel housing 20.

Meanwhile, the opening 8 of the panel housing 20 can be formed in a completely opened state, or be blocked by a thin plate. That is, the opening 8 is designed such that the displays contact each other on the basis thereof.

In addition, a variety of circuits and a central process unit are provided inside the panel housing to define a finalized display device.

The above-described embodiments are an example where the display assembly is mounted on the framework and the framework is mounted on the chassis. However, in the present invention, when the display assembly is mounted on the panel housing, the display assembly can be fixed on the panel housing in a state where the display assembly is mounted on only one of the framework or the chassis. The framework and the chassis have the similar operation to each other for fixing the display assembly, one of which can be omitted.

Meanwhile, the chassis 16 and the framework 161 are little bit different in their structures, but similar in their functions. The chassis 16 is generally made of metal such as aluminum, but may be made of plastic material. The framework 161 is generally made of plastic, but may be made of metal. In addition, the chassis 16 has a flat structure, a lower structure of which is also formed in one layer. And, the framework 161 is formed in an uneven surface structure in response to the display assembly that is also formed in an uneven surface structure so that the display can be securely mounted on the framework 161. The lower structure of the framework 161 can be formed more than two layers as the backlight system is mounted.

In addition, in the present invention, the displays 2 and 4 can be directly mounted on the panel housings 20 and 40. That is, the displays 2 and 4 are not mounted on the chassis 16 or the framework 161 but directly mounted on the panel housings 20 and 40.

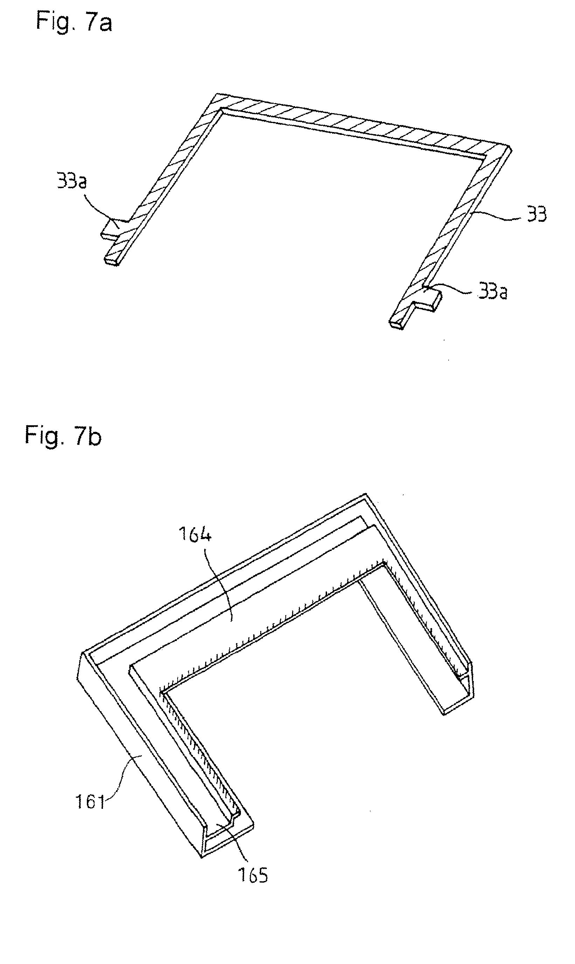

FIGS. 7a and 7b are views illustrating another embodiment of a mounting of the display panel on the framework.

As shown in FIG. 7a, a display panel is attached on a mounting hooking member 33 that is fixing means formed in ⊏-shape, and the display is fixed on the framework 161 by a mounting hook portion 33a so that it can do a hook operation. At this point, resin adhesive or both sided adhesive is coated on a deviant line portion of the mounting hooking member 33 and the display panel is mounted on the adhesive to be securely fixed.

When the display panel 2a is mounted on the mounting hooking member 33 as described above, there is no need of the panel-mounting portion 164 on the framework 161.

In addition, as shown in FIG. 7b, the display panel 2a may be attached on the panel-mounting portion 164 of the framework 161. That is, the display panel 2a may be attached on a deviant line portion in FIG. 7b by use of a both sided tape or adhesive.

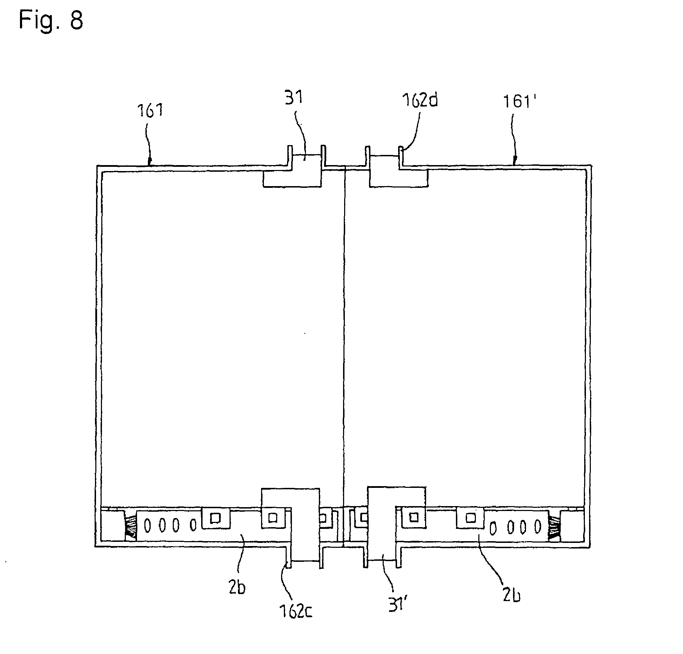

FIG. 8 is a view illustrating a symmetrical structure of the framework.

The first framework 161 mounted on the first panel housing 20 and the second framework 161' mounted on the second panel housing 40 are designed to be stuck or adjacent to each other. In addition, the first framework 161 and the second framework 161' are designed in a symmetrical structure. Here, the symmetrical structure does not means that they are physically perfect symmetrical structure, but means that the circuit-mounting portion 165, the panel-mounting portion 164 and the backlight-mounting portion 166 are symmetrically disposed.

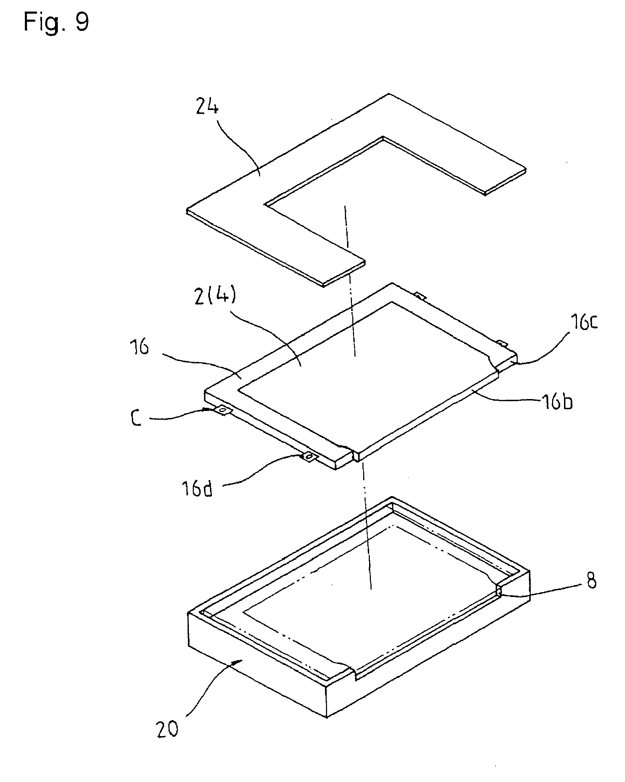

FIG. 9 shows a view illustrating another embodiment of a mounting of the display on the panel housing.

In this embodiment, there is a step between the chassis hook portion 16c and the screen joint portion 16b of the chassis 16. The chassis hook portion 16c of the chassis 16 is fixed on the side surface 20a of the panel housing to prevent the chassis 16 or the displays 2 and 4 from removing through the opening 8.

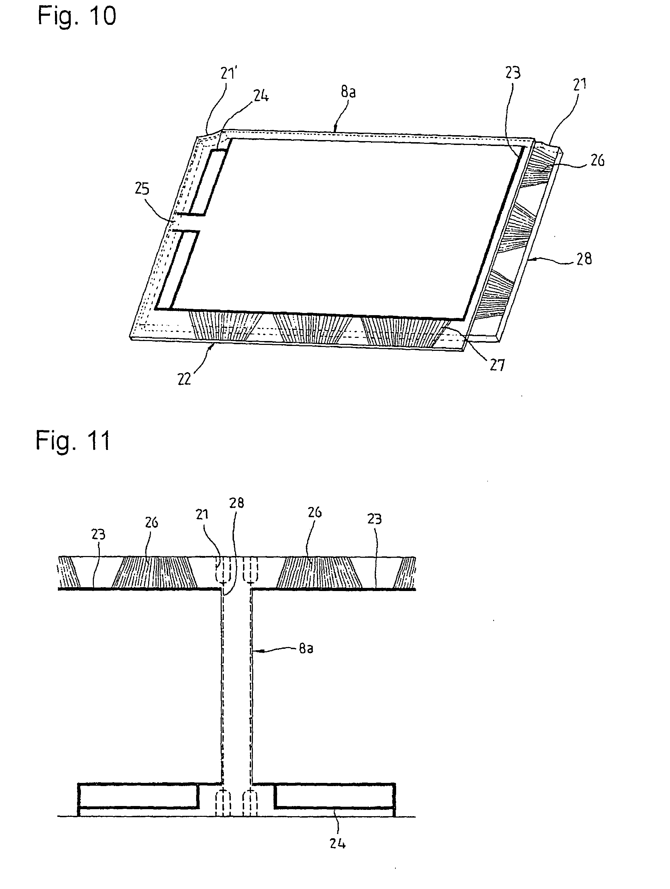

FIG. 10 shows a view illustrating a display panel.

Generally, the display is divided into a display panel and a display drive circuit portion. The display panel is made of glass material, and generally composed of upper and lower substrates 22 and 28. Driving electrodes 26 and 27 connected to a drive IC are respectively formed on the upper and lower substrates 22 and 28.

In addition, sealant 28 is used to attach the upper and lower substrates 22 and 28 in a state where they face each other. When the display is an LCD, a liquid crystal injection hole 25 is further formed.

In addition, as hooking means, a cutting portion 21 is defined in the vicinity of a screen joint portion 8a of the display panel.

In addition, sub-sealant 24 is provided to couple the extending portions of the upper and lower substrates 22 and 28, that are formed for defining the cutting portion 21'.

Meanwhile, when the display is an EL display, a single substrate may be used. In this case, the cutting portion is defined on the single substrate and other processes are identical to those for the LCD.

FIG. 11 is a view illustrating a method for forming the cutting portion on the display panel.

When manufacturing the display panel, plural display panels are formed on a single wafer, and the wafer is cut through a scribing process into plural display panels. At this point, as shown in the drawing, the display panels in the wafer are symmetrically formed at left and right sides.

To form the cutting portion, portions corresponding to be the cutting portion of the upper and lower substrates 22 and 28 are cut away by use of a saw or a drill before the display panels are removed from the wafer. In the drawing, the cutting portion is formed in a circular arc-shape, but it can be formed in a variety of shapes such as a right-angled straight line.

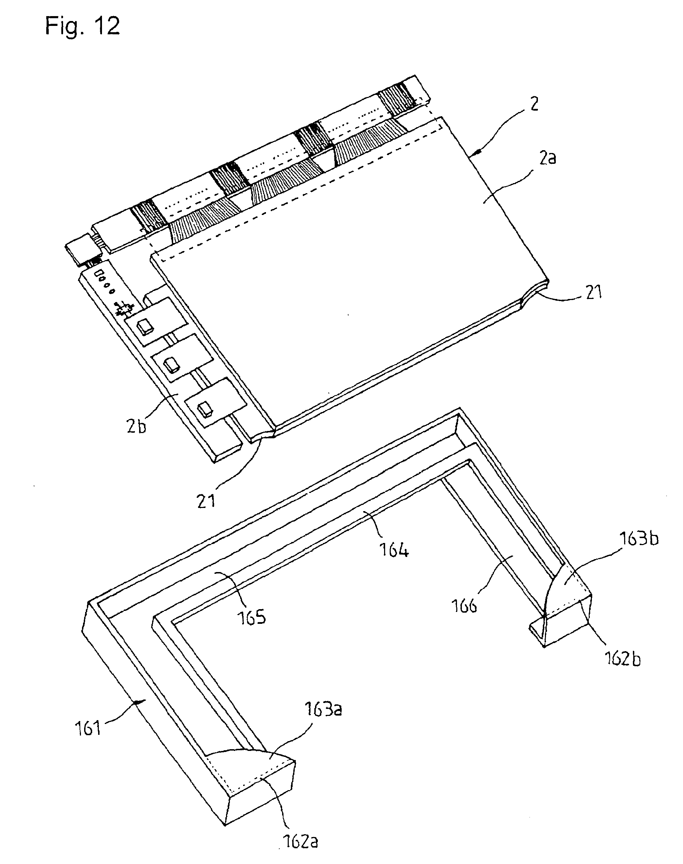

FIG. 12 is a view illustrating another embodiment of a mounting of the display on the framework.

In this embodiment, the display assembly is composed of a display panel 2a and a display drive circuit 2b without the backlight system. The framework 161 for fixing the display is provided with a circuit-mounting portion 165 for mounting a drive circuit for driving the display and a panel-mounting portion 164 for mounting the display panel.

In addition, the drive circuit 2b and the display panel 2a are provided with a cutting portion 21 acting as hooking means on hook portions 162a and 162b of the framework 161. Furthermore, to securely fix the hook portions 162a and 162b on the framework 161, hook fixing portions 163a and 163b are further provided. The hook fixing portions 163a and 163b are provided for preventing the hook portions 162a and 162b from outwardly widening.

At this point, an attaching plate for securely fixing the display panel 2 and the drive circuit 2b can be provided. The attaching plate is designed to attach a border between the drive circuit 2b and the display panel 2a. In the drawing, the portion mounted on the attaching plate is illustrated in a dotted line.

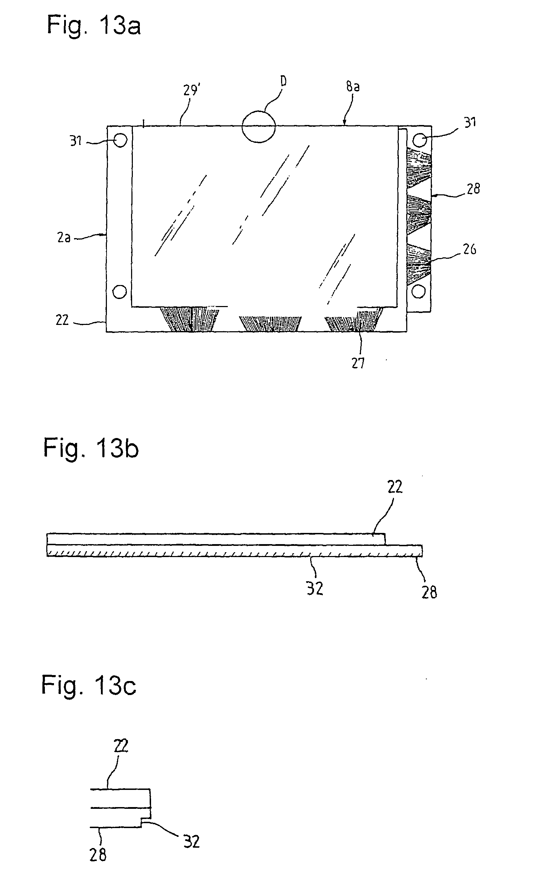

FIGS. 13a to 13c are views illustrating another embodiment of a method for forming the cutting portion.

FIG. 13a shows a view illustrating an example where a hole is formed on a display panel. A hook hole 31 is formed on a portion of the display panel 2a that is not the portion of the screen display area 29' and drive electrodes 26 and 27, by use of a cutting instrument such as a drill.

When the hook hole 31 is formed as described above, a hook portion of the framework 161, where the display is mounted, has to be designed to be fixed on the hook hole 31.

FIGS. 13b and 13c show views illustrating an embodiment where a step is formed on an end side of the display, where FIG. 13c is a partial sectional view of a portion D in FIG. 13a.

When forming the step on the display end side, while it is formed on both sides and a central portion in an embodiment of FIG. 9, the hook operation of this embodiment is realized by forming the step on lower and upper portions of the end side of the joint portion.

That is, as shown in FIG. 13b, a deviant line portion in the lower substrate 28 is a hook-cutting portion 32 and a part or whole of the hook-cutting portion 32 is cut away to define hooking means. In addition, as shown in FIG. 13c, a portion of the end side of the joint portion of the lower substrate 28 is cut away to define the hook-cutting portion 32 used as hooking means.

Meanwhile, the hook portion of the framework 161 where the display is mounted is also designed corresponding to the hook-cutting portion 32.

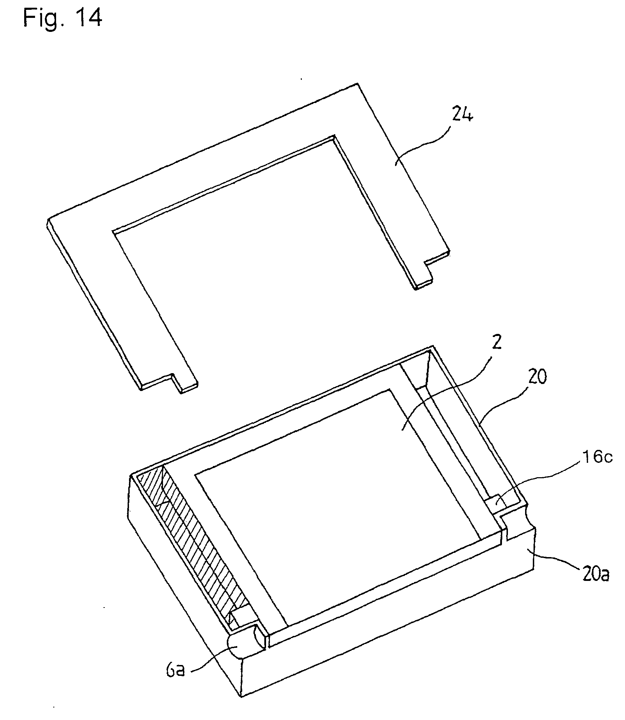

FIG. 14 is a view illustrating an embodiment of a hook operation on a connecting cutting portion of a panel housing.

When the multi-display device of the present invention is employed to a foldable display device, as shown in the drawing, a connecting cutting portion 6a is formed on the panel housing 20 to define connecting means 6 on the connecting cutting portion 6a.

In addition, when a hook portion and fixing means of the hook portion is located everywhere in a connecting cutting area illustrated by deviant line in the drawing, an identical effect to when the hook potion 16c is hooked on the connecting cutting portion 6a can be obtained.

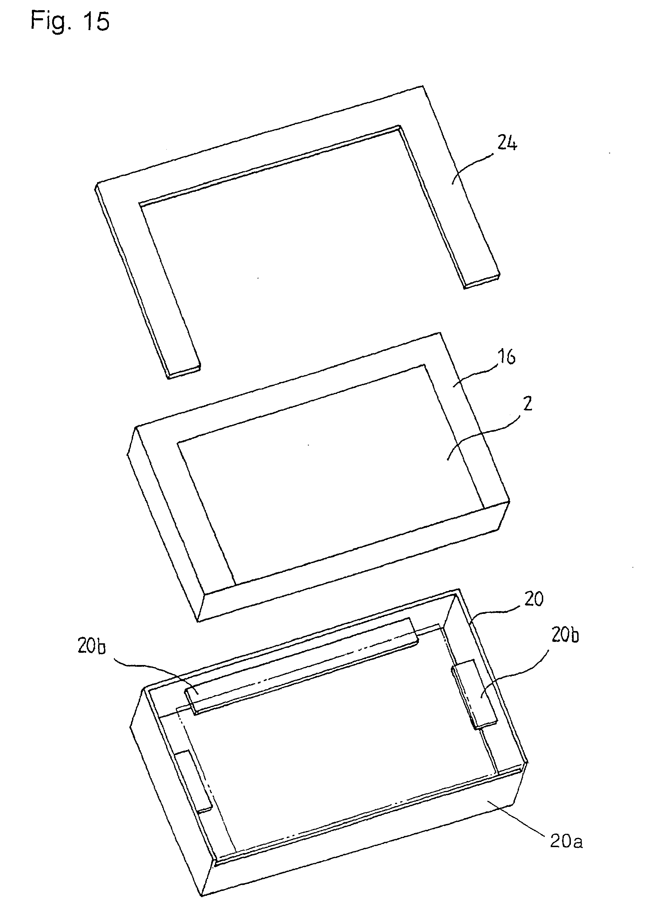

FIG. 15 is a view illustrating a panel housing provided with a lower base portion.

When the connecting cutting portion 6a of FIG. 14 is not provided, the panel housing is provided with a lower base portion 20b as shown in FIG. 15 so as to dispose the display 2 on the lower base portion 20b. Here, the display 2 is fixed on the lower base portion 20b by adhesive or both sided tape. In the drawing, the display 2 mounted on the panel housing 20 is illustrated in a two-dot broken line.

As described above, the display 2 is mounted through the framework 161 or directly mounted on the lower base portion 20b. In addition, as shown in FIG. 3, the display 2 is mounted on the lower base portion 20b through the chassis 16.

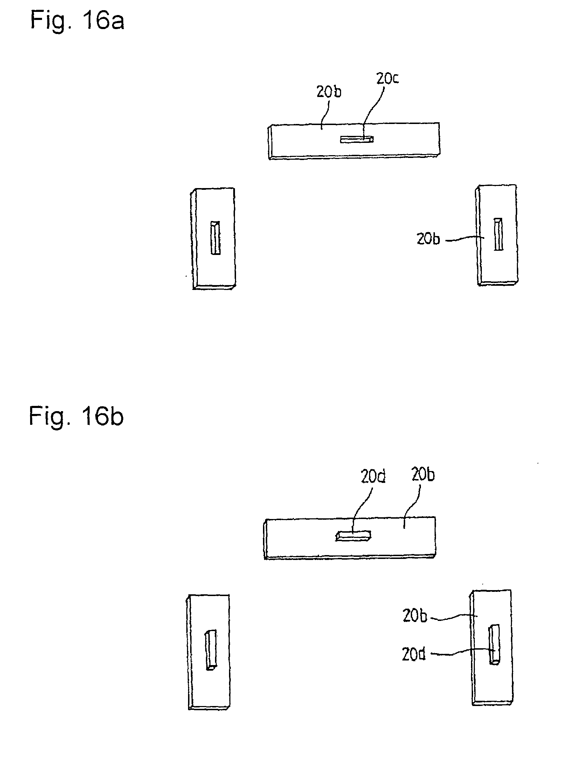

FIGS. 16a and 16b show views illustrating an embodiment of display fixing means.

As shown in FIGS. 16a and 16b, the lower base portion 20b of the panel housing 20 is provided with a base groove 20c and a base projection 20d. In addition, the display 2 is provided at its bottom with groove or projection that can be coupled to the base groove 20c and the base projection 20d. That is, the display panel 2a, the display circuit 2b, the framework 161 or the chassis 16 that can be mounted on the lower base portion 20b can be provided at its bottom with a groove or a projection.

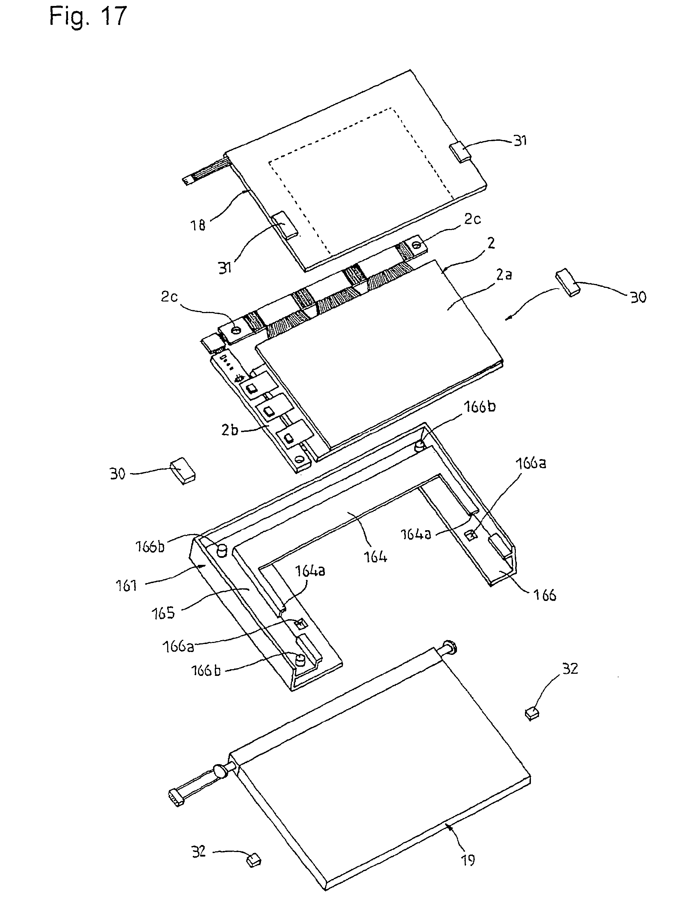

FIG. 17 is a view illustrating another embodiment of a mounting of the display on the framework, which shows the structure of the framework 161 when the fixing means is located on the bottom of the display 2.

In this embodiment, a hooking member 30 is attached on the bottom of the display 2 such that it is not protruded out of the borderline of the display 2.

In addition, when the hooking member 30 is provided on the display panel 2a, the panel-mounting portion 164 is provided with a hook-cutting portion 164a so that the display panel 2a can be fixed on the panel-mounting portion 164. Furthermore, the display circuit 2b is mounted on the circuit-mounting portion 165 by inserting a hook projection 166b into a hook hole 2c provided on the display circuit 2b.

A hooking member 31 is also attached on the input system 18 such that it is not protruded out of the border portion of the input system 18. In this case, hooking means for fixing the hooking member 31 of the input system 18 on the panel housing 20 or the chassis 16.

Meanwhile, a hooking member 32 is also attached on a bottom of the backlight system 19 such that it is not protruded out of the border of the backlight system 19. Accordingly, the backlight system 19 is securely fixed by a hook groove 166a of the backlight-mounting portion 166 for fixing the hooking member 32.

As described above, as fixing means is provided on the bottom or top of the display such that it is not protruded out of the border of the display, the display can be effectively mounted on even the panel housings depicted in FIG. 14 that is not provided with the connection cutting portion 6a.

Meanwhile, although a projection structure and a groove structure are exampled as hooking means and fixing means of the framework and the chassis, a structure such as male and female screw structures can be also used.

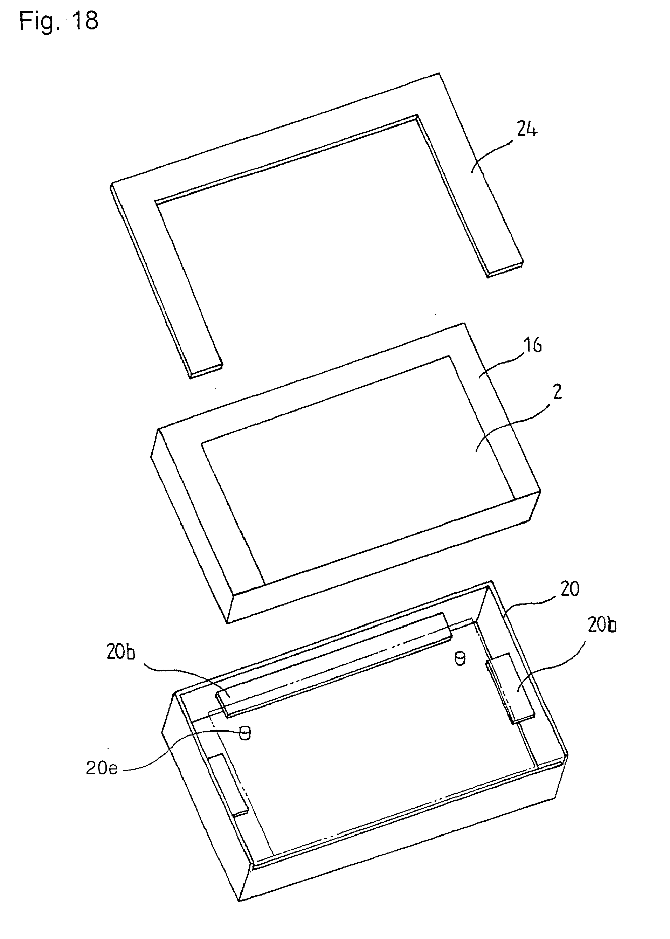

FIG. 18 is a view illustrating fixing means specially prepared from the lower base portion.

In this embodiment, as shown in the drawing, fixing means 20e specially prepared away from the lower base portion 20b of the panel housing 20 is provided on the panel housing 20. The display, framework or chassis is provided with a groove or the like in which the fixing means 20e is coupled.

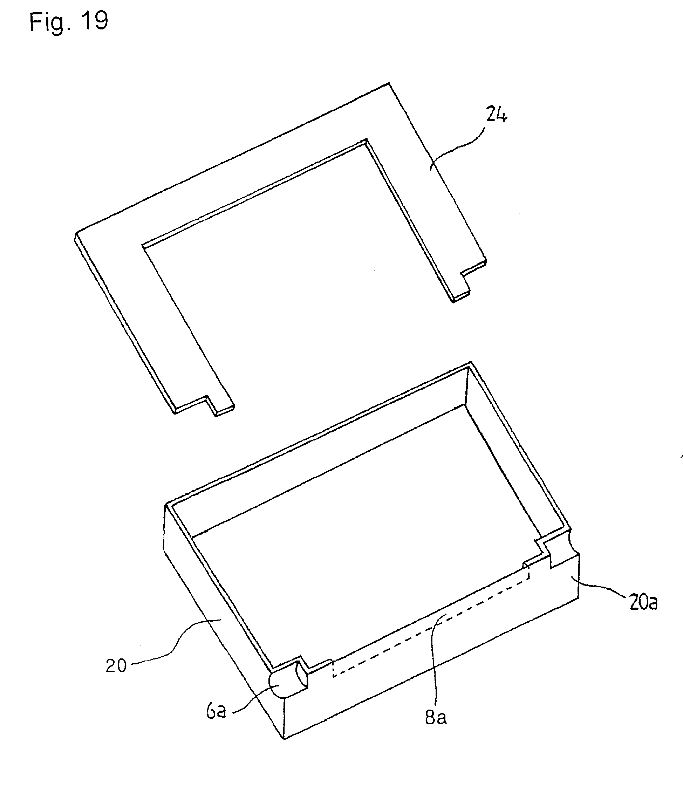

FIG. 19 is a view illustrating an embodiment where the panel housing is provided with a screen joint portion.

As shown in the drawing, the panel housing 20 can be provided with a screen joint portion 8a at a portion where the joint portion 8' of the display, the screen joint portion 163d of the framework 161, or the screen joint portion 16b of the chassis 16 is mounted. The displays 2 are disposed adjacent to each other by the screen joint portion 8a that is designed thinner than other portion of the panel housing 20. In addition, as described above, the screen joint portion 8a can be defined by an opening 8.

Although the present invention is described with an example of a foldable display device, the present invention can be applied to all of the multi-display devices having a structure where an opening or a screen joint portion is provided on the panel housing to adjacently dispose the displays mounted on the plural panel housings at least at their one side.

### [Industrial Applicability]

As describe above, the portable multi-display device of the present invention is designed such that displays mounted on plural panel housings can be securely fixed on the panel housings while they are disposed adjacent to each other by forming a screen joint portion on at lease one side of a framework where the display is mounted.

## Claims

1. A portable multi-display device comprising:
at least two panel housings (20, 40) in which a variety of circuits and displays (2) are mounted, the displays being designed adjacent to each other at their one side;
a framework (161) for fixing the displays (2) to mount the displays (2) into the panel housings (20, 40);
**characterized in that**
each of the displays (2) has a joint portion (8') adjacent to each other, the framework (161) is provided with a frame joint portion (163d) so that the joint portion (8') of the display is disposed on the frame joint portion (163d), whereby the displays (2) are disposed adjacently to each other, and the displays (2) mounted on the framework (161) closely join one another to make a single larged-sized screen when the panel housing (20,40) is unfolded.

2. A portable multi-display device of claim 1
wherein the frame joint portion (163d) is opened.

3. A portable multi-display device of claim 1
wherein the frame joint portion (163d) is not formed on a portion of the framework facing the display (2).

4. A portable multi-display device of claim 1
wherein the frame joint portion (163d) is formed thinner than other portions of the framework (161).

5. A portable multi-display device of claim 1,
wherein the display mounted on the framework comprises engaging means (162a, 162b) for engaqinq the display (2) to fix the display (2) to the framework (161).

6. A portable multi-display device of claim 5
wherein the framework (161) comprises a fixing portion (163a, 163b) for fixing the engaging means (162a, 162b) of the display (2).

7. A portable multi-display device of claim 6
wherein the panel housing (20, 40) comprises fixing means for fixing the fixing portion (163a, 163b) of the framework (161).

8. A portable multi-display device of claim 1 further comprising a chassis (16a, 16e) for mounting the framework (161), the chassis being provided with a chassis joint portion (16b).

9. A portable multi-display device of claim 1
wherein the framework (161) mounted on the first panel housing (20) and the framework (161') mounted on the second panel housing (40) are disposed in a symmetrical structure.

10. A portable multi-display device of claim 5
wherein a panel or a drive circuit (2b) of the display (2) is provided with engaging means (30).

11. A portable multi-display device of claim 1
wherein fixing means for fixing the framework is formed on a lower portion of the framework opposite to the display (2).

12. A portable multi-display device of claim 1
wherein the panel housing (20) is provided with a housing joint portion (8) that is formed thinner than other portions of the panel housing (20).

13. A portable multi-display device of claim 1
wherein the framework is a chassis (16).

14. A portable multi-display device of claim 13
wherein the chassis (16) is provided with a chassis engaging portion (16c') that is mounted on the fixing means (16g) of the panel housing (20).

15. A portable multi-display device comprising:
at least two panel housings (20, 40) disposed adjacent to each other at their at least one side,
at least two displays mounted on the panel housings (20, 40) to be adjacent to each other at their at least one side, the display (2, 4) being provided with engaging means;
wherein the engaging means engages the displays (2, 4) to fix the displays (2, 4) to the panel housings (20, 40);
**characterized in that**
each of the displays (2, 4) has a joint portion (8') adjacent to each other, and the panel housings (20, 40) are provided with a housing joint portion (8) so that the joint portion (8') of the display (2, 4) is disposed on the housing joint portion (8), whereby the displays (2, 4) are disposed adjacently to each other.

16. A portable multi-display device of claim 15
wherein the engaging means is defined by a cutting portion (21) formed on the display panels (2, 4).

17. A portable multi-display device of claim 16
wherein the engaging means is an engaging member (30, 30') attached on the display panel.

18. A portable multi-display device of claim 17
wherein the display panel (2, 4) is provided with a cutting portion (21).

19. A portable multi-display device of claim 15
wherein the panel housing (20, 40) is provided with a housing joint portion (8) formed thinner than other portions of the panel housing (20, 40).
